# EUROPEAN PATENT APPLICATION

(11) **EP 4 611 081 A1**
(43) Date of publication of application: **03.09.2025**
(21) Application number: 22963514.9
(22) Date of filing: 28.10.2022
(51) Int. Cl.: H01M 8/0438, H01M 8/04746

(54) **FUEL CELL SYSTEM AND METHOD FOR CONTROLLING FUEL CELL SYSTEM**

(71) Applicant: MITSUBISHI ELECTRIC CORPORATION, Chiyoda-ku Tokyo 100-8310 (JP)
(72) Inventor: SHINOKI, Toshio, Tokyo 100-8310 (JP); KAWAMOTO, Makoto, Tokyo 100-8310 (JP); KIKUCHI, Yuto, Tokyo 100-8310 (JP)
(74) Representative: Meissner Bolte Partnerschaft mbB
(86) International application number: PCT/JP2022/040313
(87) International publication number: WO 2024/089867

(57) **Abstract**

A control method of a fuel cell system according to the present invention uses a fuel cell system (100) including a raw material supply system (1) configured to supply a raw material, a water vapor supply system (2) configured to supply water vapor to the raw material supply system (1), a fuel cell (3) configured to generate electric energy from hydrogen generated from the raw material and an oxidizing agent, and a recycle gas system (4) configured to circulate a recycle gas, which is at least a part of an anode off-gas discharged from an anode (3A) of the fuel cell (3), to the raw material supply system (1). A flow rate of water vapor flowing through the water vapor supply system (2) is controlled in accordance with a flow rate of carbon dioxide contained in the recycle gas flowing through the recycle gas system (4).

## Description

### Technical Field

The present invention relates to a fuel cell system and a control method of a fuel cell system.

### Background Art

An exhaust gas discharged from a fuel cell contains carbon dioxide. Patent Document 1 discloses a technology of reforming a raw material gas using carbon dioxide contained in an exhaust gas (anode off-gas) to generate a synthesis gas and supplying the synthesis gas to a fuel cell.

### Citation List

### Patent Documents

Patent Document 1: Japanese Unexamined Patent Application, First Publication JP 2010 - 15 860 A

### Summary of the Invention

### Problem to be Solved by the Invention

In the technology, improvement has been required in terms of energy efficiency of a fuel cell system.

In view of the above circumstances, an object of the present invention is to provide a fuel cell system and a control method of a fuel cell system capable of improving energy efficiency.

### Means to Solve the Problem

According one aspect of the present invention, there is provided a control method of a fuel cell system including a raw material supply system configured to supply a raw material, a water vapor supply system configured to supply water vapor to the raw material supply system, a fuel cell configured to generate electric energy from hydrogen generated from the raw material and an oxidizing agent, and a recycle gas system configured to circulate a recycle gas, which is at least a part of an anode off-gas discharged from an anode of the fuel cell, to the raw material supply system, the control method includes: controlling, using the fuel cell system, a flow rate of water vapor flowing through the water vapor supply system in accordance with a flow rate of carbon dioxide contained in the recycle gas flowing through the recycle gas system.

According to another aspect of the present invention, there is provided a fuel cell system including a raw material supply system configured to supply a raw material, a water vapor supply system configured to supply water vapor to the raw material supply system, a fuel cell configured to generate electric energy from hydrogen generated from the raw material and an oxidizing agent, a recycle gas system configured to circulate a recycle gas, which is at least a part of an anode off-gas discharged from an anode of the fuel cell, to the raw material supply system, and a control unit configured to control a flow rate of water vapor flowing through the water vapor supply system in accordance with a flow rate of carbon dioxide contained in the recycle gas flowing through the recycle gas system.

### Effects of the Invention

According to the present invention, it is possible to provide a fuel cell system and a control method of a fuel cell system capable of improving energy efficiency.

### Brief Description of the Drawings

- FIG. 1: A schematic diagram of a fuel cell system according to Embodiment 1.
- FIG. 2: A flowchart of a control method of a fuel cell system according to Embodiment 2.
- FIG. 3: A flowchart of a control method of a fuel cell system according to Embodiment 3.
- FIG. 4: A schematic diagram of a fuel cell system according to Embodiment 4.
- FIG. 5: A schematic diagram of a fuel cell system according to Embodiment 5.

### Description of Embodiments

Hereinafter, embodiments of the present invention will be described with reference to the drawings. The scope of the present invention is not limited to the following embodiments, and can be changed in any way within the scope of technical ideas of the present invention.

### Embodiment 1.

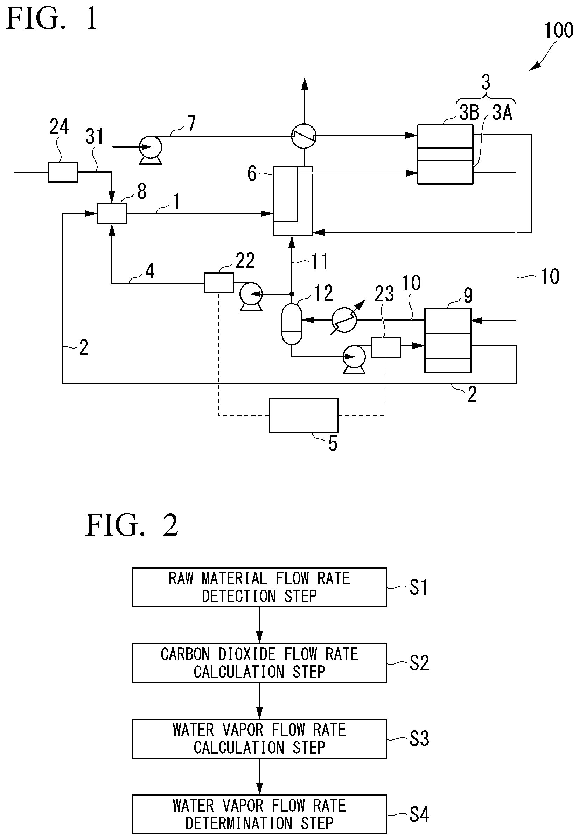

FIG. 1 is a schematic diagram of a fuel cell system 100 according to Embodiment 1. As shown in FIG. 1, the fuel cell system 100 includes a raw material supply system 1, a water vapor supply system 2, a fuel cell 3, a recycle gas system 4, a control unit 5, a reformer 6, an air supply system 7, a mixer 8, a water vapor generator 9, an anode off-gas system 10, a supply path 11, and a separation unit 12.

The raw material supply system 1 supplies a raw material. The raw material contains a carbon-containing substance (for example, a hydrocarbon) such as methane (CH₄). The raw material is introduced into the raw material supply system 1 through the mixer 8 from a supply path 31. Hereinafter, methane will be given as an example of the carbon-containing substance.

The water vapor supply system 2 supplies water vapor (H₂O). The water vapor supply system 2 guides the water vapor obtained by the water vapor generator 9 to the mixer 8.

In the reformer 6, a water vapor reforming reaction is carried out with the raw material and the water vapor. The water vapor reforming reaction follows, for example, Formula (I) and Formula (II) shown below.

CH₄ + H₂O → CO + 3H₂ ... (I)

CO + H₂O → CO₂ + H₂ ... (II)

In the reformer 6, a carbon dioxide reforming reaction using the raw material and carbon dioxide contained in a recycle gas is carried out. The carbon dioxide reforming reaction follows, for example, Formula (III) and Formula (IV) shown below.

CH₄ + CO₂ → 2CO + 2H₂ ... (III)

2CO + 2H₂O → 2CO₂ + 2H₂ ... (IV)

In the reformer 6, a reformed gas is obtained by the water vapor reforming reaction and the carbon dioxide reforming. The reformed gas contains hydrogen (H₂) generated from the raw material.

It is preferable that the reformer 6 includes a water vapor reforming catalyst and a carbon dioxide reforming catalyst. Examples of the water vapor reforming catalyst include Ni-supported alumina and Ru-supported alumina. The water vapor reforming catalyst promotes the water vapor reforming reaction. Examples of the carbon dioxide reforming catalyst include Ni-supported yttria and Pt-supported yttria. The carbon dioxide reforming catalyst promotes the carbon dioxide reforming reaction. The water vapor reforming catalyst and the carbon dioxide reforming catalyst may be mixed and packed into the reformer 6.

The water vapor reforming catalyst and the carbon dioxide reforming catalyst may form different layers and be packed into the reformer 6. It is considered that the water vapor reforming catalyst and the carbon dioxide reforming catalyst are packed into the reformer 6 in accordance with, for example, an appropriate temperature range for each catalyst to function.

The air supply system 7 supplies air (oxidizing agent) to the fuel cell 3. The air supplied from the air supply system 7 is an oxygen-containing gas. The oxygen-containing gas contains oxygen (O₂) as an oxidizing agent.

The reformed gas obtained by the reformer 6 is supplied to an anode 3A of the fuel cell 3. The air supplied from the air supply system 7 is supplied to a cathode 3B of the fuel cell 3. The fuel cell 3 generates electricity through a reaction between a reformed gas containing hydrogen (H₂) and air (oxidizing agent), and generates electric energy.

A reaction at the anode 3A follows, for example, Formula (V) shown below in a case of a solid oxide fuel cell. A reaction at the cathode 3B follows, for example, Formula (VI) shown below.

H₂ + O²⁻ → H₂O + 2e⁻ ... (V)

1/2O₂ + 2e⁻ → O²⁻ ... (VI)

An anode off-gas is discharged from the anode 3A of the fuel cell 3. The anode off-gas contains, for example, carbon dioxide (CO₂), water vapor (H₂O), carbon monoxide (CO), and methane (CH₄).

The anode off-gas system 10 takes out the anode off-gas from the fuel cell 3 (anode 3A) and guides the anode off-gas to the separation unit 12 via the water vapor generator 9.

The separation unit 12 can condense a part of the anode off-gas supplied from the anode off-gas system 10.

The recycle gas system 4 supplies at least a part of the anode off-gas as a recycle gas. Specifically, the recycle gas system 4 guides at least a part of the anode off-gas from the separation unit 12 to the mixer 8 as the recycle gas. As a result, the recycle gas system 4 circulates the recycle gas to the raw material supply system 1.

The supply path 11 branches off from the recycle gas system 4. The supply path 11 guides a part of the recycle gas to a combustor (not shown) thermally connected to the reformer 6.

The water vapor generator 9 obtains water vapor by heating water supplied from the separation unit 12 through heat exchange with the anode off-gas.

A control method of a fuel cell system according to Embodiment 1 will be described.

The control unit 5 determines the flow rate of each gas composition of the recycle gas flowing through the recycle gas system 4, and controls the flow rate of the water vapor flowing through the water vapor supply system 2 in accordance with the flow rates. The flow rate of the recycle gas flowing through the recycle gas system 4 is detected by a flowmeter 22 provided in the recycle gas system 4. In order to control the flow rate of the water vapor flowing through the water vapor supply system 2, a mass flow controller 23 provided in the water vapor supply system 2 is used.

In the present embodiment, hydrogen is generated by using water vapor reforming and carbon dioxide reforming in combination. Here, in order to generate water vapor in the water vapor generator 9, thermal energy is required. Therefore, in a situation where hydrogen can be sufficiently generated by carbon dioxide reforming, the energy efficiency of the entire system can be improved by reducing the reliance on water vapor reforming.

Meanwhile, in a situation where there is insufficient carbon dioxide to carry out the carbon dioxide reforming, the operation of the system can be stabilized by utilizing the water vapor reforming. In view of the above, for example, when the flow rate of carbon dioxide contained in the recycle gas increases and exceeds a first set value, the control unit 5 decreases the flow rate of water vapor. When the flow rate of carbon dioxide contained in the recycle gas decreases and falls below a second set value, the control unit 5 increases the flow rate of water vapor.

In the control method of the fuel cell system, the flow rate of water vapor flowing through the water vapor supply system 2 is controlled in accordance with the flow rate of carbon dioxide contained in the recycle gas. Therefore, in the reformer 6, an appropriate reforming reaction can be carried out by water vapor reforming and carbon dioxide reforming. In the control method of the fuel cell system, the water vapor reforming and the carbon dioxide reforming are used in combination, so that the amount of water vapor supply can be suppressed. Therefore, it is possible to reduce energy consumption for generating water vapor in the water vapor generator 9. Accordingly, it is possible to improve the energy efficiency of the fuel cell system 100.

In the control method of the fuel cell system, a part of the anode off-gas is returned to an upstream side of the fuel cell 3 as the recycle gas, so that the raw materials can be effectively used, and the energy efficiency of the fuel cell system 100 can be improved.

In the control method of the fuel cell system, the flow rate of water vapor is controlled in accordance with the flow rate of carbon dioxide contained in the recycle gas, so that, even when the amount of the anode off-gas, that is, the flow rate of carbon dioxide in the anode off-gas is small at start-up or the like, a decrease in the efficiency of the reforming reaction can be suppressed.

### Embodiment 2.

FIG. 2 is a flowchart of a control method of a fuel cell system according to Embodiment 2. The same components as those in Embodiment 1 are denoted by the same reference numerals, and the description thereof will be omitted.

As shown in FIG. 2, the control method of the fuel cell system executes a raw material flow rate detection step S1, a carbon dioxide flow rate calculation step S2, a water vapor flow rate calculation step S3, and a water vapor flow rate determination step S4.

In the raw material flow rate detection step S1, the flow rate of the raw material in the raw material supply system 1 is detected. The flow rate of the raw material can be detected by a flowmeter 24 provided in the supply path 31 (see FIG. 1).

In the carbon dioxide flow rate calculation step S2, the flow rate of carbon dioxide (CO₂) in the recycle gas in the recycle gas system 4 is calculated. The flow rate of carbon dioxide can be calculated based on, for example, information on operating conditions (gas consumption amount, gas generation amount, reaction gas utilization rate, reaction temperature, and the like) of the reformer 6 and the fuel cell 3, flow rate information of the raw material, the flow rate of water vapor flowing through the water vapor supply system 2, and the flow rate ratio of the recycle gas to the anode off-gas (see FIG. 1).

The flow rate of the recycle gas can be detected by the flowmeter 22 provided in the recycle gas system 4 (see FIG. 1). In addition, the flow rate of the anode off-gas system 10 can be calculated from various operating conditions of the fuel cell 3. Therefore, the flow rate ratio of the recycle gas to the anode off-gas can be calculated based on the flow rate obtained by subtracting a condensation amount calculated from a condensation temperature of the separation unit 12 from the flow rate of the anode off-gas system 10, and a detected value of the flowmeter provided in the recycle gas system 4.

In the water vapor flow rate calculation step S3, the flow rate of water vapor (H₂O) in the recycle gas of the recycle gas system 4 is calculated. The flow rate of the water vapor in the recycle gas can be calculated based on, for example, the flow rate of the raw material, the amount of the water vapor consumed in the reformer 6, the amount of water vapor generated in the fuel cell, the amount of water vapor condensed in the separation unit 12, and the flow rate of the recycle gas.

In the water vapor flow rate determination step S4, the control unit 5 controls the flow rate of the water vapor flowing through the water vapor supply system 2 by using the mass flow controller 23 based on, for example, the flow rate of carbon dioxide in the recycle gas and the flow rate of the water vapor in the recycle gas.

The flow rate of carbon dioxide in the recycle gas calculated in the carbon dioxide flow rate calculation step S2 may be calculated based on the information on the operating conditions (gas consumption amount, gas generation amount, reaction gas utilization rate, reaction temperature, and the like) of the reformer 6 and the fuel cell 3, the flow rate information of the raw material, the flow rate of water vapor flowing through the water vapor supply system 2, and the flow rate ratio of the recycle gas to the anode off-gas. According to this calculation method, the system configuration is simpler than when a dedicated sensor for detecting the flow rate of carbon dioxide is used, so that costs can be reduced.

In the control method of the fuel cell system, the flow rate of water vapor flowing through the water vapor supply system 2 is controlled in accordance with the flow rates of carbon dioxide and water vapor in the recycle gas. Therefore, in the reformer 6, the water vapor reforming reaction and the carbon dioxide reforming reaction can be stably carried out at an appropriate water vapor flow rate and carbon dioxide flow rate.

### Embodiment 3.

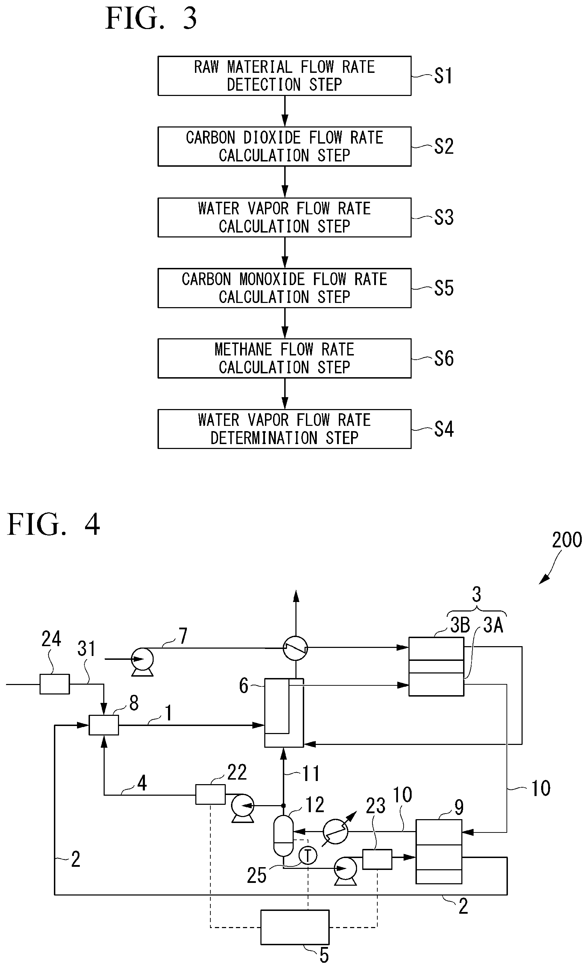

FIG. 3 is a flowchart of a control method of a fuel cell system according to Embodiment 3. The same components as those in other embodiments are denoted by the same reference numerals, and the description thereof will be omitted.

As shown in FIG. 3, the control method of the fuel cell system includes a raw material flow rate detection step S1, a carbon dioxide flow rate calculation step S2, a water vapor flow rate calculation step S3, a carbon monoxide flow rate calculation step S5, a methane flow rate calculation step S6, and a water vapor flow rate determination step S4.

In the carbon monoxide flow rate calculation step S5, the flow rate of carbon monoxide (CO) in the recycle gas in the recycle gas system 4 is calculated. The flow rate of carbon monoxide can be calculated based on, for example, the flow rate of the raw material, the flow rate of water vapor flowing through the water vapor supply system 2, the amount of carbon monoxide generated and consumed in the reformer 6 and the fuel cell 3, and the flow rate of the recycle gas.

In the methane flow rate calculation step S6, the flow rate of methane (CH₄) of the recycle gas in the recycle gas system 4 is calculated. The flow rate of methane can be calculated based on, for example, the flow rate of the raw material, the flow rate of water vapor flowing through the water vapor supply system 2, the amount of methane consumed and reacted in the reformer 6 and the fuel cell 3, and the flow rate of the recycle gas.

In the water vapor flow rate determination step S4, the control unit 5 controls the flow rate of the water vapor flowing through the water vapor supply system 2 by using the mass flow controller 23 based on, for example, the flow rate of carbon dioxide in the recycle gas, the flow rate of the water vapor in the recycle gas, the flow rate of carbon monoxide in the recycle gas, and the flow rate of methane in recycle gas.

A sum of the flow rate of water vapor from the water vapor supply system 2 (the number of moles per unit time) and the flow rate of water vapor in the recycle gas (the number of moles per unit time) is denoted by S1.

A sum of carbon contained in the raw material (the number of moles per unit time), the flow rate of carbon monoxide in the recycle gas (the number of moles per unit time), and the flow rate of methane in the recycle gas (the number of moles per unit time) is denoted by C1. A ratio (S1/C1) of S1 to C1 is preferably less than 2.5. When S1/C1 is less than 2.5, the amount of water vapor used for the water vapor reforming can be reduced. Therefore, the energy used for generating water vapor in the water vapor generator 9 can be reduced.

A sum of the flow rate of water vapor from the water vapor supply system 2 (the number of moles per unit time), the flow rate of water vapor in the recycle gas (the number of moles per unit time), and the flow rate of carbon dioxide in the recycle gas (the number of moles per unit time) is denoted by S2. A ratio (S2/C1) of S2 to C1 is preferably 2 or more. When S2/C1 is 2 or more, a ratio of water vapor reforming to the reforming reaction is increased, so that a stable reforming reaction with less carbon deposition can be carried out. Therefore, it is possible to improve the system efficiency.

In the control method of the fuel cell system, the flow rate of water vapor flowing through the water vapor supply system 2 is controlled in accordance with the flow rates of carbon dioxide, water vapor, carbon monoxide, and methane in the recycle gas. Therefore, in the reformer 6, stable water vapor reforming and carbon dioxide reforming can be achieved.

A control method of the fuel cell system when a load on the fuel cell 3 changes will be described. When the load on the fuel cell 3 changes, it is desirable to perform the water vapor flow rate determination step according to at least load information obtained from the operating conditions of the fuel cell 3 and flow rate information of the carbon dioxide in the recycle gas.

According to the control method of the fuel cell system, it is possible to suppress a decrease in reaction efficiency of the water vapor reforming and carbon dioxide reforming in the reformer 6 when the load increases.

### Embodiment 4.

FIG. 4 is a schematic diagram of a fuel cell system 200 according to Embodiment 4. The same components as those in other embodiments are denoted by the same reference numerals, and the description thereof will be omitted.

As shown in FIG. 4, the fuel cell system 200 includes a thermometer 25 that detects a temperature of the water vapor in the separation unit 12. A detected value of the thermometer 25 indicates the condensation temperature of the anode off-gas in the separation unit 12.

In the control method of the fuel cell system, the detected value of the thermometer 25 indicates the condensation temperature of the anode off-gas, so that the control unit 5 can determine the flow rate of the water vapor in the recycle gas based on the detected value of the thermometer 25.

### Embodiment 5.

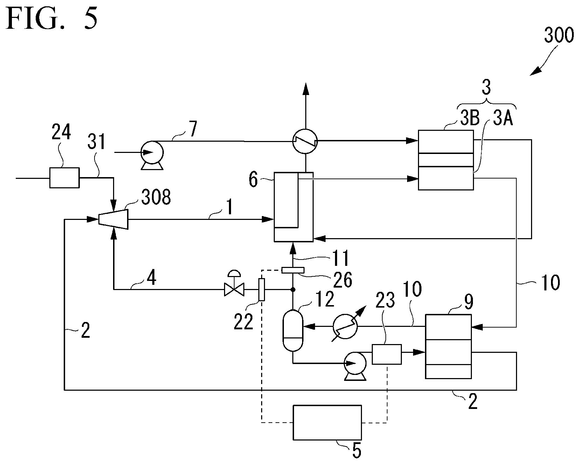

FIG. 5 is a schematic diagram of a fuel cell system 300 according to Embodiment 5. The same components as those in other embodiments are denoted by the same reference numerals, and the description thereof will be omitted.

As shown in FIG. 5, the fuel cell system 300 includes an ejector 308 instead of the mixer 8 (see FIG. 1). The ejector 308 is provided in the raw material supply system 1. The water vapor supply system 2, the supply path 31, and the recycle gas system 4 are connected to the ejector 308. The ejector 308 sucks the recycle gas from the recycle gas system 4 using the water vapor from the water vapor supply system 2 as a driving fluid. The ejector 308 can also suck the raw material from the supply path 31 using the water vapor from the water vapor supply system 2 as a driving fluid.

A flowmeter 26 that detects the flow rate of the recycle gas is provided in the supply path 11. In a case where the flowmeter 22 and the flowmeter 26 have the same specifications, the flow rate ratio of the recycle gas to the anode off-gas can be calculated based on the detected value of the flowmeter 22 and the detected value of the flowmeter 26, regardless of a composition of a mixed gas flowing through the supply path 11 and the recycle gas system 4. The control unit 5 can control the flow rate of the water vapor flowing through the water vapor supply system 2 in consideration of the flow rate ratio.

In the control method of the fuel cell system, the ejector 308 can be used to suck the recycle gas and the raw material, so that energy saving can be achieved as compared with a case where the recycle gas and the raw material are supplied by using a blower or the like.

The technical scope of the present invention is not limited to the above embodiments, and various modifications can be made without departing from the gist of the present invention.

For example, in the fuel cell system 100 shown in FIG. 1, the reformer 6 is separate from the fuel cell 3, but a reforming reaction can also be carried out inside the fuel cell. Therefore, the fuel cell system may have a configuration in which the reformer is not provided.

In the fuel cell system 100 shown in FIG. 1, the water vapor generator 9 generates water vapor through heat exchange with the anode off-gas, but the configuration of the water vapor generator is not particularly limited. The water vapor generator may generate water vapor by using, for example, exhaust heat from the fuel cell. The water vapor generator may generate water vapor by using, for example, heat inside the reformer.

### LIST OF REFERENCE SIGNS

- 1: Raw material supply system
- 2: Water vapor supply system
- 3: Fuel cell
- 4: Recycle gas system
- 5: Control unit
- 6: Reformer
- 100, 200, 300: Fuel cell system

## Claims

1. A control method of a fuel cell system including:
- a raw material supply system configured to supply a raw material;
- a water vapor supply system configured to supply water vapor to the raw material supply system;
- a fuel cell configured to generate electric energy from hydrogen generated from the raw material and an oxidizing agent; and
- a recycle gas system configured to circulate a recycle gas, which is at least a part of an anode off-gas discharged from an anode of the fuel cell, to the raw material supply system,
the control method comprising:
controlling, using the fuel cell system, a flow rate of water vapor flowing through the water vapor supply system in accordance with a flow rate of carbon dioxide contained in the recycle gas flowing through the recycle gas system.

2. The control method of a fuel cell system according to Claim 1,
wherein the fuel cell system executes:
- a raw material flow rate detection step of detecting a flow rate of the raw material in the raw material supply system;
- a carbon dioxide flow rate calculation step of calculating the flow rate of the carbon dioxide in the recycle gas in the recycle gas system;
- a water vapor flow rate calculation step of calculating a flow rate of water vapor in the recycle gas in the recycle gas system; and
- a water vapor flow rate determination step of determining the flow rate of the water vapor.

3. The control method of a fuel cell system according to Claim 2,
wherein the fuel cell system executes:
- a carbon monoxide flow rate calculation step of calculating a flow rate of carbon monoxide in the recycle gas in the recycle gas system; and
- a methane flow rate calculation step of calculating a flow rate of methane in the recycle gas of the recycle gas system.

4. The control method of a fuel cell system according to Claim 2 or 3,
wherein the water vapor flow rate determination step is performed based on at least the flow rate of the carbon dioxide in the recycle gas, the flow rate of the water vapor in the recycle gas, and the flow rate of the raw material.

5. The control method of a fuel cell system according to any one of Claims 2 to 4, wherein, when a load on the fuel cell changes, the water vapor flow rate determination step is performed according to at least load information obtained from an operating condition of the fuel cell and flow rate information of the carbon dioxide in the recycle gas.

6. The control method of a fuel cell system according to any one of Claims 2 to 5, wherein the flow rate of the carbon dioxide in the recycle gas is calculated from information on an operating condition of the fuel cell, flow rate information of the raw material, the flow rate of the water vapor flowing through the water vapor supply system, and a flow rate ratio of the recycle gas to the anode off-gas.

7. The control method of a fuel cell system according to any one of Claims 2 to 6, wherein the flow rate of the water vapor in the recycle gas is determined at a condensation temperature of the anode off-gas.

8. The control method of a fuel cell system according to any one of Claims 2 to 7, wherein an ejector configured to suck the recycle gas with the water vapor from the water vapor supply system is used.

9. A fuel cell system comprising:
- a raw material supply system configured to supply a raw material;
- a water vapor supply system configured to supply water vapor to the raw material supply system;
- a fuel cell configured to generate electric energy from hydrogen generated from the raw material and an oxidizing agent;
- a recycle gas system configured to circulate a recycle gas, which is at least a part of an anode off-gas discharged from an anode of the fuel cell, to the raw material supply system; and
- a control unit configured to control a flow rate of water vapor flowing through the water vapor supply system in accordance with a flow rate of carbon dioxide contained in the recycle gas flowing through the recycle gas system.

10. The fuel cell system according to Claim 9,
further comprising:
a reformer configured to reform the raw material,
wherein the reformer includes a water vapor reforming catalyst that promotes a water vapor reforming reaction and a carbon dioxide reforming catalyst that promotes a carbon dioxide reforming reaction.
